# EUROPEAN PATENT SPECIFICATION

(11) **EP 2 438 381 B1**
(45) Date of publication and mention of the grant of the patent: **17.05.2017**
(21) Application number: 10718339.4
(22) Date of filing: 21.04.2010
(51) Int. Cl.: F28D 9/00, F28F 27/02

(54) **A PLATE HEAT EXCHANGER**
PLATTENWÄRMETAUSCHER
ÉCHANGEUR DE CHALEUR À PLAQUES

(30) Priority: 04.06.2009 SE 0950405
(43) Date of publication of application: 11.04.2012
(73) Proprietor: Alfa Laval Corporate AB, 221 00 Lund (SE)
(72) Inventor: HELIN, Perola Magnus, S-372 36 Ronneby (SE); GÅRDMO, Johan, S-371 91 Karlskrona (SE)
(74) Representative: Alfa Laval Attorneys
(86) International application number: PCT/SE2010/050436
(87) International publication number: WO 2010/140954

(56) References cited:
- WO-A1-02/01124
- WO-A1-2005/054758
- WO-A1-2007/003193
- US-B2- 7 152 663

## Description

### THE BACKGROUND OF THE INVENTION AND PRIOR ART

The present invention refers to a plate heat exchanger according to the preamble of claim 1.

EP-B-608 195 discloses such a plate heat exchanger with a sensor device comprising a temperature sensor with an elongated shape. The temperature sensor extends in one of the port channels of the plate heat exchanger, which communicates with some of the heat transfer passages of the plate package. The temperature sensor communicates with a valve for controlling a flow of for instance district heat water through the plate heat exchanger.

DK-U-9600205 discloses a similar plate heat exchanger provided with a space arranged outside the plate heat exchanger and extending at an outer surface of the plate hear exchanger. An elongated temperature sensor is provided in the space. The space communicates with passages for one of the fluids in the plate heat exchanger. The space is provided in the proximity of an inlet or outlet opening of the heat exchanger. The temperature sensor is arranged to co-operate with equipment for controlling a flow of one of the fluids through the plate heat exchanger.

These documents thus suggest the provision of a separate sensor outside the plate heat exchanger or in any of the port channels of the plate heat exchanger. The provision of such a separate sensor is difficult from a manufacturing point of view. Furthermore, a sensor in any of the port channels results in an increased flow resistance, not only due to the sensor itself but also due to the components required for attaching sensor in the port channel. The known arrangements also have the disadvantage that the time constant is long, i.e. it takes a relatively long time before a temperature change of one or both fluids results in a sufficient influence on said medium, and thus in for instance a desired change of a valve position.

US-B-7,152,663 discloses a plate heat exchanger according to the preamble of claim 1 where these problems at least partly have been solved. In one of the disclosed embodiments, the closed space of the sensor device is formed by two of the heat exchanger plates in the plate package. In such a way, the closed space may be provided in very close heat transferring contact with one or both of the media. Consequently, possibilities are created for achieving a large contact surface of the sensor device. With a large contact service, a large drive force is achieved for, for instance, a control valve, the valve position of which is controlled by means of the sensor medium, and a short time constant at a short dead time, i.e. a very quick reaction to changes of the temperature of any of the media is obtained.

One problem which is not solved in an optimum manner with the plate heat exchanger disclosed in US-B-7,152,663 is that the sensor device can result in a too large control deviation on the secondary side when operation changes occur. The solution disclosed in US-B-7,152,663 ensures that the closed space of the sensor device is only influenced by either one of the media from only one adjacent plate interspace or possibly by both of the media. In order to achieve a proper control it is necessary that the sensor device may sense a temperature of the secondary media which is representative for the desired temperature of the secondary media.

A further problem in the context is that the temperature profile along the plate interspaces may be such that it is difficult to achieve a representative and proper temperature sensing of the sensor device. If the sensor media comprises for instance a gaseous phase and a liquid phase, the result of the temperature influence on the sensor device will be different at the different phases. Due to the fact that the border between the gaseous phase and the liquid phase is not located at a constant level, the control can be problematic. The temperature influence on the gas phase results in a relatively smaller pressure increase of the sensor medium than the temperature influence on the liquid phase. If the gaseous phase to a substantial part is located in the area where the secondary medium has a high temperature, this temperature may rise without achieving a sufficient pressure increase of the sensor medium, and thus also no sufficient influence on the throttle member.

### SUMMARY OF THE INVENTION

The object of the present invention is to remedy the problems mentioned above and provide a plate heat exchanger with an improved sensor device ensuring a proper and uniform control of the temperature of the secondary medium.

This object is achieved by the plate heat exchanger initially defined, which is characterised in that the space comprises a first part space, which is delimited by one of said heat exchanger plates that adjoins and is in heat transfer contract with the outermost secondary plate interspace, and a second part space, which adjoins and is in heat transfer contact with the secondary outlet that is located downstream the secondary plate interspaces.

In such a way, the sensor device, i.e. the sensor medium contained in the close space, will be influenced by the temperature of the secondary medium from two sides or positions. Consequently, a quick control and a control based on a correct, or at least substantially correct, temperature is achieved. The secondary medium in the secondary outlet, which adjoins the second part space, has a uniform, or substantially uniform, temperature corresponding to the outlet temperature of the secondary medium. Since the second part space of the sensor device adjoins the secondary outlet, the sensor media will in a substantial way be influenced by the temperature to be achieved by means of controlling.

According to an embodiment of the invention, the first part space adjoins substantially the whole, or the whole, of said heat exchanger plate delimiting the outermost secondary plate interspace. In such a way, a large contact surface, ensuring that a large and sufficient drive force is generated by the sensor media for the influencing of the throttle member, is achieved.

According to an embodiment of the invention, the secondary outlet comprises a secondary outlet port channel extending through the plate package. The secondary outlet may advantageously also comprise a first outlet channel extending outwardly in line with the secondary outlet port channel through the front side for discharge of at least a part of the secondary medium with achieved outlet temperature.

According to an embodiment of the invention, the second part space is provided in the secondary outlet port channel. Advantageously, the second part space may be provided in such a way that it is surrounded by the secondary medium in the secondary outlet port channel. In such a way, it is ensured that sensor medium in the second part space will be in heat transfer contact with the secondary medium and influenced by the outlet temperature of the secondary medium.

According to an embodiment of the invention, the second part space is delimited by one of said heat exchanger plates which adjoins an outlet plate interspace forming a part of the secondary outlet. In such a way, the sensor medium in the second part space may also adjoin and be influenced by the outlet temperature of the secondary medium over a large surface so that a substantial temperature influence is achieved. Advantageously, the secondary outlet then comprise a second outlet channel extending from the outlet plate interspace outwardly from the rear side.

According to an embodiment of the invention, the secondary outlet port channel is located in the proximity of the first end and the second outlet channel in the proximity of the second end. In such a way a long and thus large contact surface between the second part space and the outlet plate interspace is ensured. Advantageously, the outlet plate interspace communicates with the secondary plate interspaces merely via the secondary outlet port channel. In such a way, a uniform, or substantially uniform, distribution of the temperature of the secondary medium is ensured in the whole outlet plate interspace.

According to an embodiment of the invention, the outlet plate interspace has a thickness of which is significantly thicker than the thickness of the secondary plate interspaces. The secondary outlet port channel does then not need to extend through the front side. The whole flow of the secondary medium may thus be discharged via the second outlet channel.

According to an embodiment of the invention, the primary inlet port channel, the primary outlet port channel and the secondary inlet port channel extend through front side.

According to an embodiment of the invention, the throttle member comprises an influencing member which is connected to the first part space and the second part space, and arranged to influence the throttle member by sensing a pressure change of the sensor medium in the first part space and the second part space. The throttle member may advantageously be arranged to control the flow of the primary medium through the primary plate interspaces in response to the sensor medium.

### BRIEF DESCRIPTION OF THE DRAWINGS

The present invention is now to be explained more closely through a description of various embodiments and with reference to the drawings attached hereto.
- Fig. 1: discloses schematically a front view of a plate heat exchanger according to a first embodiment of the invention.
- Fig. 2: discloses schematically a side view through the plate heat exchanger along line II-II in Fig. 1.
- Fig. 3: discloses schematically a side view through the plate heat exchanger along line III-III in Fig. 1.
- Fig. 4: discloses schematically a front view of a plate heat exchanger according to a second embodiment of the invention.
- Fig. 5: discloses schematically a side view through the plate heat exchanger along the line V-V in Fig. 4.
- Fig. 6: discloses schematically a side view through the plate heat exchanger along the line VI-VI in Fig. 4.
- Fig. 7: discloses schematically a front view of a plate heat exchanger according to a third embodiment of the invention.
- Fig. 8: discloses schematically a side view through the plate heat exchanger along the line VII-VII in Fig. 7.
- Fig. 9: discloses schematically a side view through the plate heat exchanger along the line IX-IX in Fig. 7.

### DETAILED DESCRIPTION OF VARIOUS EMBODIMENTS OF THE INVENTION

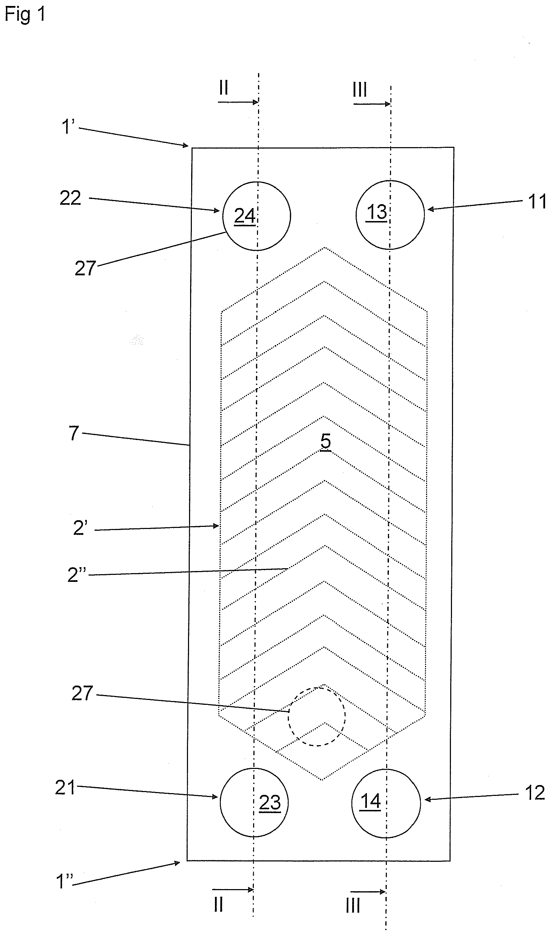

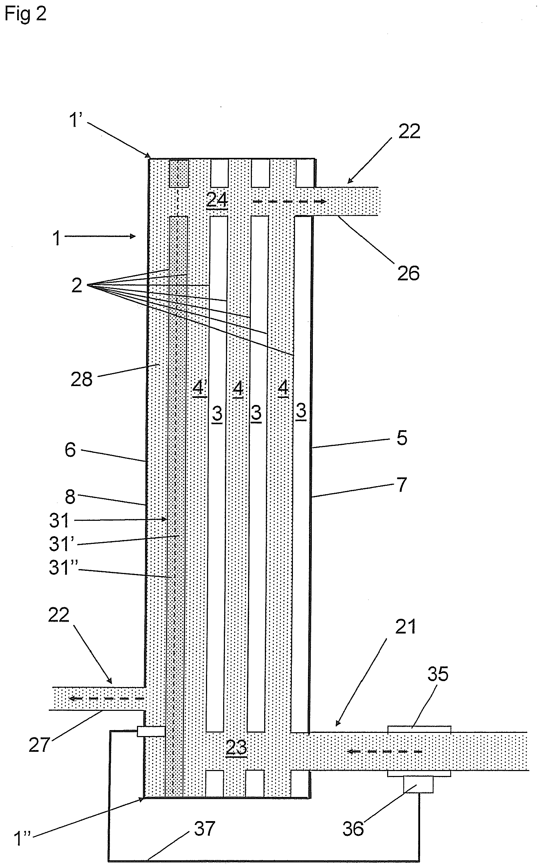

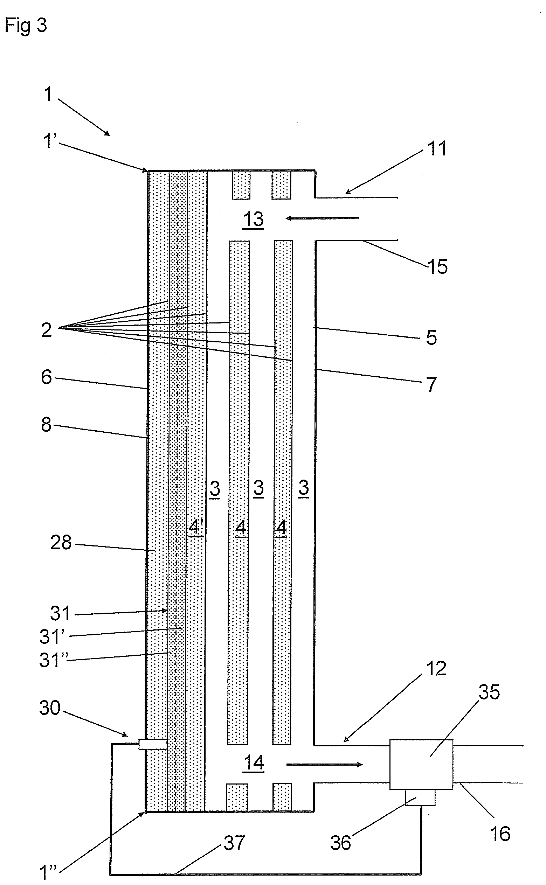

Figs. 1-3 disclose a plate heat exchanger according to a first embodiment of the invention. The plate heat exchanger comprises a plate package 1, with a plurality of heat exchanger plates 2 which are compression-moulded in a manner known per se and comprise a heat transfer surface 2' with a compression-moulded corrugation 2" of ridges and valleys, schematically disclosed in Fig. 1. The heat exchanger plates 2 are provided beside each other in the plate package 1 in such a way that they form primary plate interspaces 3 for a primary medium and secondary plate interspaces 4' for a secondary medium, see Figs. 2 and 3. A first of the secondary plate interspaces forms an outermost secondary plate interspace 4'. The primary and secondary plate interspaces 3 and 4, 4' are provided in an alternating order in the plate package, i.e. every second plate interspace is a primary plate interspace 3 and every second a secondary plate interspace 4, 4'.

The plate heat exchanger disclosed is especially configured for an application in a local heating network or a district heating network, for instance for heating of tap water, wherein the primary medium is district heating water from a central district heating plant and the secondary medium is tapwater to be heated by the district heating water in the plate heat exchanger. In the heating network, any heating source can be used, for instance a heating plant, an oil heater, a sun energy plant etc.. It is to be noted, however, that the plate heat exchanger according to the invention may also be used in other applications, for instance for cooling, in heat pump plants, in industrial process for cooling, in heat pump plants in industrial process, for cooling and/or heating in vehicles etc..

The plate package has a first end 1' and a second opposite end 1", and a front side 5 and an opposite rear side 6. A front side plate 7 is provided outermost at the front side 5 and can be formed by an outermost heat exchanger plate 2 or by a plane plate provided outside but preferably against the outermost heat exchanger plate 2. The plate heat exchanger may also comprise a corresponding rear side plate 8 provided outermost at the rear side 6 and which may be formed by the outermost heat exchanger plate 2 or by a plane plate provided outside but preferably against the outermost heat exchanger plate 2.

In the embodiments disclosed, the heat exchanger plates 2 are permanently connected to each other by for instance brazing, gluing or welding. Preferably, also the front side plate 7, and possibly the rear side plate 8, are permanently connected to the heat exchanger plates 2 by for instance brazing, gluing or welding. The front side plate 7 and the rear side plate 8 may then form a part of the plate package 1. However, it is to be noted that the invention also is applicable to plate heat exchangers which are kept together in any other way, such as by means of tie bolts.

The plate heat exchanger comprises a primary inlet 11 and a primary outlet 12 for the primary medium, and a secondary inlet 21 and a secondary outlet 22 for the secondary medium, se Figs. 1 and 3.

The primary inlet 11 is arranged to transport the primary medium into the plate package 1 to the primary plate interspaces 3. The primary inlet 11 comprises a primary inlet port channel 13 extending through at least a part of the plate package 1. The primary inlet port channel 13 is formed by a porthole through each of the heat exchanger plates 2 except for some of the heat exchanger plates 2 as will be seen more closely below.

The primary outlet 12 is arranged to transport the primary medium out from the plate package 1 from the primary plate interspaces 3. The primary outlet 12 comprises a primary outlet port channel 14 extending through at least a part of the plate package 1. The primary outlet port channel 14 is formed by a porthole through each of the heat exchanger plates 2 except for some of the heat exchanger plates 2 as can be seen more closely below.

The secondary inlet 21 is arranged to transport the secondary medium into the plate package 1 to the secondary plate interspaces 4. The secondary inlet 21 comprises a secondary inlet port channel 23 extending through at least a part of the plate package 1. The secondary inlet port channel 23 is formed by a porthole through each of the heat exchanger plates 2 except for some of the heat exchanger plates 2, as can be seen more closely below. It is to be noted that the secondary inlet 21 may comprise more than one, for instance two, secondary inlet port channels.

The secondary outlet 22 is arranged to transport the secondary medium out from the plate package 1 from the secondary plate interspace 4, 4'. The secondary outlet 22 comprises a secondary outlet port channel 24 extending through at least a part of the plate package 1. The secondary outlet port channel 24 is formed by a porthole through each of the heat exchanger plates 2.

The plate heat exchanger comprises a sensor device 30, which comprises a space 31 which is closed in relation to the primary plate interspaces 3 and in relation to the secondary plate interspaces 4, 4'. The space 31 contains a sensor medium which is provided to be influenced by the temperature of the secondary medium. The sensor medium may advantageously comprise or consist of a substance which is in gaseous phase and a liquid phase at the temperature and the pressure prevailing in the space 31. The sensor medium may for instance comprise or consist of carbon dioxide and active carbon or a gas-liquid mixture.

The space 31 comprises a first part space 31' and a second part space 31". The first part space 31' is delimited by one of the heat exchanger plates 2, which adjoins and is in heat transfer contact with the outermost secondary plate interspace 4'. The second part space 31' adjoins and is in heat transfer contact with the secondary outlet 22 which is located downstream the secondary plate interspace 4, 4". The first part space 31' adjoins substantially the whole of said adjoining heat exchanger plate 2 which delimits the outermost secondary plate interspace 4'.

In the first embodiment disclosed in Figs. 1-3, the space 31, i.e. both the first part space 31' and the second part space 41", is defined by two of the heat exchanger plates 2. The border between the first part space 31' and the second part space 31" is marked with a dashed line in Figs. 2 and 3. The space 31 is formed by a closed plate interspace adjoining the first outermost secondary plate interspace 4' and an outlet plate interspace 28. The outlet plate interspace 28 forms a part of the secondary outlet 22 and is also defined by two heat exchanger plates 2. The space 31 is thus divided into a first part space 31', which adjoins the first outermost secondary plate interspace 4', and a second part space 31" which adjoins the outlet plate interspace 28.

The secondary outlet 22 comprises a first outlet channel 26 which extends in line with the secondary outlet port channel 24 through the front side 5 and through the front side plate 7. Consequently, the primary inlet port channel 13, the primary outlet port channel 14, the secondary inlet channel 23 and the secondary outlet port channel 24 extend through the front side plate 7, i.e. outwardly from the front side 5.

In the first embodiment, the secondary outlet 22 also comprises a second outlet channel 27 extending from the outlet plate interspace 28 outwardly from the rear side 6 and through the rear side plate 8.

The second outlet channel 27 is located at or in the proximity of the second end 1" whereas the secondary outlet port channel 24 is located at or in the proximity of the first end 1'. Since the outlet plate interspace 28 communicates with the first outermost secondary plate interspace 4' and the remaining secondary plate interspace 4 merely via the secondary outlet port channel 24, the secondary medium in the outlet port channel 28 will not be influenced by the primary medium. The space 31, and in particular the second part space 31", will therefore not be influenced by the outlet temperature, or the final temperature, of the secondary medium before it leaves the plate heat exchanger along the whole, or substantially the whole, surface of the heat exchanger plate located between the space 31, i.e. the second part space 31", and the outlet plate interspace 28.

The plate heat exchanger is connected to or comprises a throttle member 35 connected to the sensor device 30. The throttle member 35 is in the embodiments disclosed arranged to control the flow of the primary medium through the primary plate interspaces 3 in response to the sensor medium. However, it is to be noted that the throttle member 35 may be arranged to control the flow of the secondary medium through the secondary plate interspaces 4 in response to sensor medium. The throttle member 35 may be realized in the form of a valve of suitable design. In the embodiments disclosed, the throttle member 35 is provided on a connection pipe 16 from the primary outlet 12, but it may also be provided on a connection pipe 15 to the primary inlet 11.

The throttle member 35 comprises an influencing member 35 which is connected to the space 31 via a conduit 37, for instance and electric conduit or a capillary tube configured to transfer a pressure change in the space 31 to the influencing member 36. The influencing member 36 is arranged to influence the throttle member 35 by sensing a pressure change of the sensor medium in the space 31. The pressure of the sensor medium is depending on the temperature. An increase of the temperature of the secondary medium leads to an increase of the pressure of the sensor medium which via the influencing member 36 increases the throttling of the throttle member 35 so that the flow of the primary medium is reduced. In a corresponding way, a decrease of the temperature of the secondary medium leads to a decrease of the pressure of the sensor medium which via the influencing member 36 reduces the throttling of the throttle member 35 so that the flow of the primary medium is increased. In a cooling application, the influencing member 36 is inverted so that an increase of the temperature of the secondary medium leads to an increase of the pressure of the sensor medium which via the influencing member 36 decreases the throttling of the throttle member 35 so that the flow of the primary medium increases.

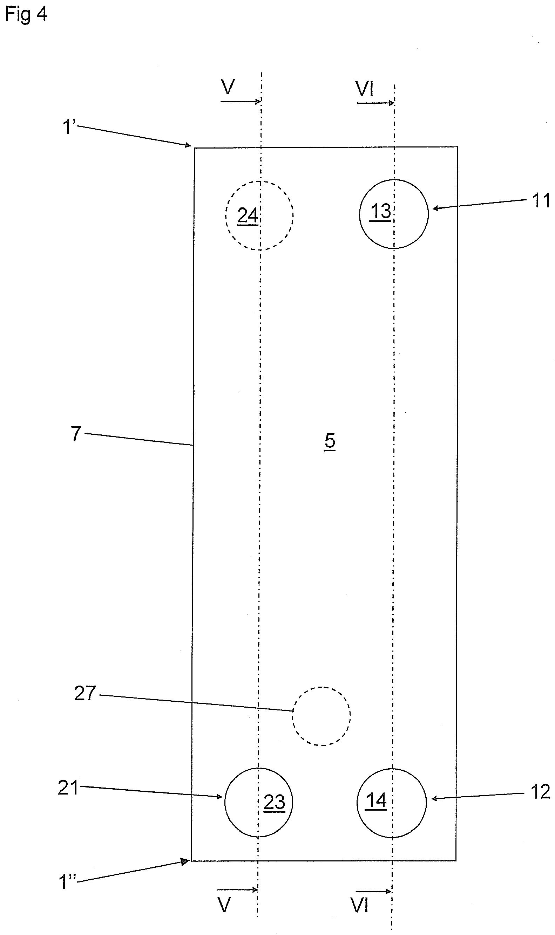

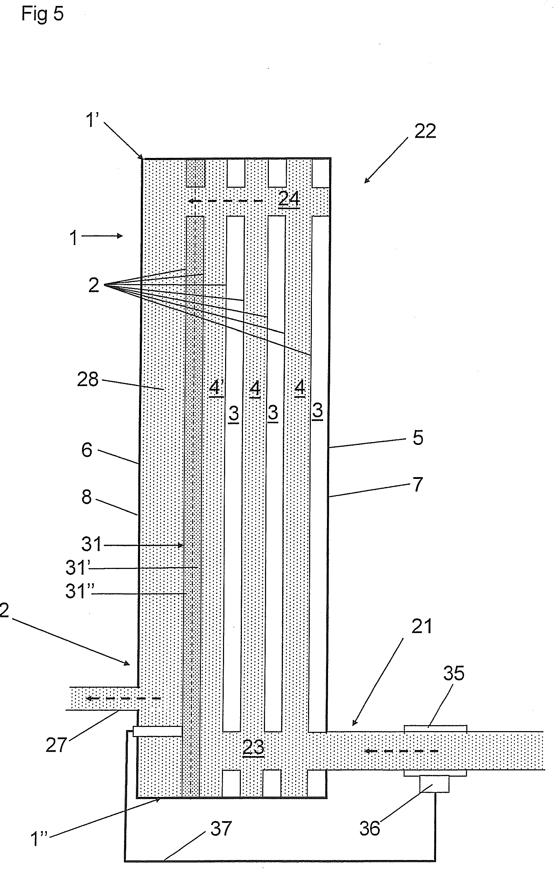

Figs. 4-6 disclose a second embodiment of the plate heat exchanger according to the invention. It is to be noted that the same or similar elements have been provided with the same reference signs in the embodiments disclosed. The second embodiment differs from the first embodiment in that the secondary outlet port channel 24 does not extend through the front side 5 and the front side plate 7. The secondary outlet 22 thus comprises only one second outlet channel 27 which extends from the outlet plate interspace 28. In the second embodiment, this second outlet channel 27 extends from the rear side 6 through the rear side plate 8. It is to be noted that the plate heat exchanger according to the second embodiment may comprise several such second outlet channels 27 extending from the outlet plate interspace 28.

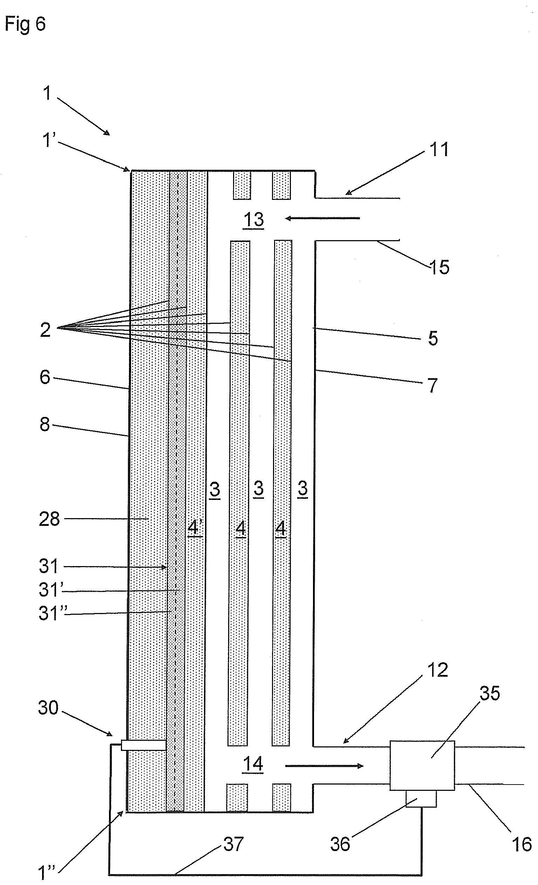

As can be seen in Fig. 6, the heat exchanger plate 2, which separates the first outermost secondary plate interspace 4' and the outermost primary plate interspace 3, lacks portholes along the primary inlet port channel 13 and the primary outlet port channel 14.

As also can be seen in Fig. 6, the outlet plate interspace 28 has a thickness which is significantly thicker than the thickness of the secondary plate interspaces 4, 4'. For instance, the outlet plate interspace 28 may have a thickness which is twice as thick, or substantially twice as thick, as the thickness of the secondary plate interspaces 4, 4'.

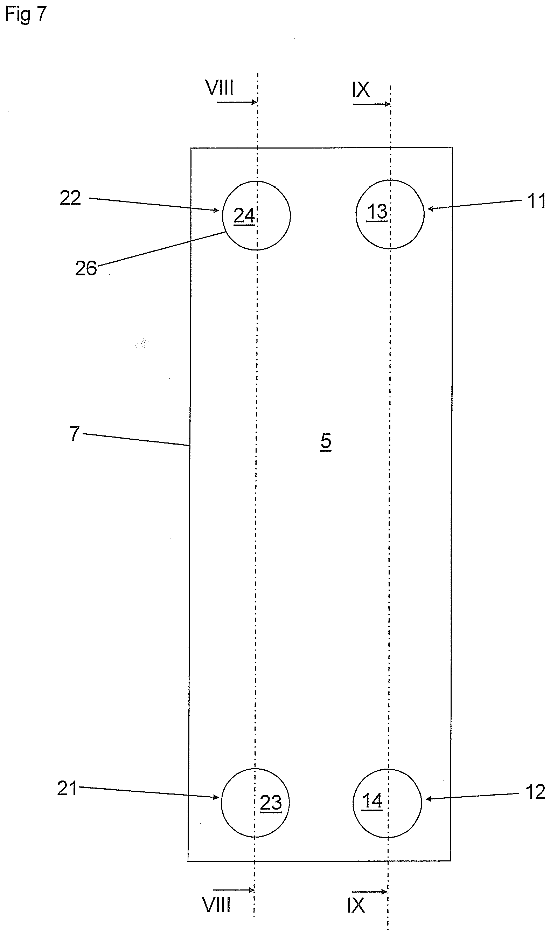

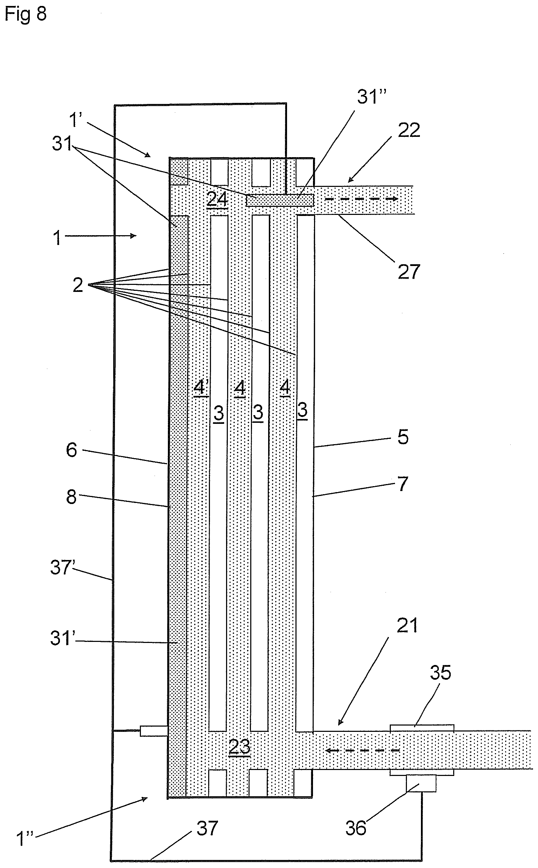

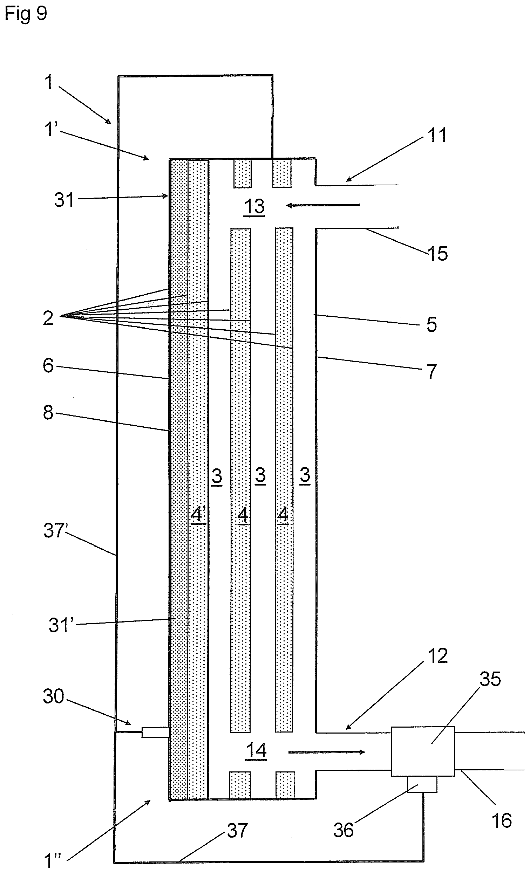

Figs. 7-9 discloses a third embodiment of the invention, which differs from the first and second embodiments in that the plate heat exchanger lacks the outlet plate interspace 28 and in that the second part space 31" is provided separately from the first part space 31, but connected to the latter and to the influencing member 36 via the conduit 37'. Consequently one and the same sensor medium is distributed in and between the two part space 31' and 31".

In the third embodiment, the second part space 31" is provided in the second outlet port channel 24 which is a part of the secondary outlet 22 and which is located downstream the secondary plate interspaces 4, 4'. The second part space 31" is formed by a hollow closed element, for instance a tubular element, which is provided in the secondary outlet port channel 24 in such a way that the second part space 31" adjoins and is surrounded by the secondary medium. The second part space 31" in the closed element communicates with the first part space 31' via the conduit 37'. The sensor medium in the second part space 31" will therefore be in heat transfer contact with the secondary medium and influenced by the outlet temperature of the secondary medium before it leaves the plate heat exchanger along the whole, or substantially the whole surface of the second part space 31" or of the tubular element forming and inclosing the second part space 31".

In the third embodiment, the first part space 31' of the space 31 will thus adjoin directly the rear side 6 and possibly the rear side plate 8.

The invention is not limited to the embodiments disclosed but may be varied and modified within the scope of the following claims.

In the embodiments disclosed, the plate heat exchanger is configured for counter flow flowing of the primary medium and the secondary medium. It is possible to configure the plate heat exchanger according to other flowing principles, such as parallel flowing or flowing in the same direction. Furthermore, the primary inlet port channel 13 and the primary outlet port channel 14 may be located diagonally, and not straight above each other as disclosed in the figures. The same apply also to the secondary inlet port channel 23 and the secondary outlet port channel 24.

## Claims

1. A plate heat exchanger comprising
a plate package (1) with a plurality of heat exchanger plates (2), which are provided beside each other in the plate package (1) in such a way that they form primary plate interspaces (3) for a primary medium and secondary plate interspaces (4) for a secondary medium, which primary and secondary plate interspaces (3, 4) are provided in an alternating order in the plate package (1), wherein the plate package (1) has a first end (1') and a second opposite end (1"), and a front side (5) and an opposite rear side (6), wherein one first of the secondary plate interspaces (4) forms an outermost secondary plate interspace (4'),
a primary inlet (11), which is arranged to transport the primary medium into the plate package (1) to the primary plate interspaces (3) and comprises a primary inlet port channel (13),
a primary outlet (12), which is arranged to transport the primary medium out from the plate package (1) from the primary plate interspaces (3) and comprises a primary outlet port channel (14),
a secondary inlet (21), which is arranged to transport the secondary medium into the plate package (1) to the secondary plate interspaces (4, 4") and comprises at least one secondary inlet port channel (23),
a secondary outlet (22), which is arranged to transport the secondary medium outlet from the plate package (1) from the secondary plate interspaces (4, 4'),
a sensor device (30), which comprises a space (31) which is closed in relation to the primary plate interspaces (3) and the secondary plate interspaces (4, 4'), wherein the space (31) contains a sensor medium which is provided to be influenced by the temeperature of the secondary medium, and
a throttle member (35), which is connected to the sensor device (30) and arranged to control the flow of one of the primary medium and the secondary medium in response to the sensor medium,
**characterized in that** the space (31) comprises a first part space (31'), which is delimited by one of said heat exchanger plates (2) that adjoins and is in heat transfer contact with the outermost secondary plate interspace (4'), and a second part space (31"), which adjoins and is in heat transfer contact with the secondary outlet (22) that is located downstream the secondary plate interspaces (4, 4').

2. A plate heat exchanger according to claim 1, wherein the first part space (31') adjoins substantially the whole of said heat exchanger plate (2) delimiting the outermost secondary plate intespace (4').

3. A plate heat exchanger according to anyone of claims 1 and 2, wherein the secondary outlet (22) comprises a secondary outlet port channel (24) extending through the plate package (1).

4. A plate heat exchanger according to claim 3, wherein the secondary outlet (22) comprises a first outlet channel (26) extending outwardly in line with the secondary outlet port channel (24) through the front side (5).

5. A plate heat exchanger according to anyone of claims 3 and 4, wherein the second part space (31") is provided in the secondary outlet port channel (4).

6. A plate heat exchanger according to claim 5, wherein the second part space (31") is surrounded by the secondary medium in the secondary outlet port channel (24).

7. A plate heat exchanger according to anyone of claims 1 and 2, wherein the second part space (31") is delimited by one of said heat exchanger plates (2) which adjoins an outlet plate interspace (28) forming a part of the secondary outlet (22).

8. A plate heat exchanger according to claim 7, wherein the secondary outlet (22) comprises a second outlet channel (27) extending from the outlet plate intespace (28) outwardly from the rear side (6).

9. A plate heat exchanger according to claims 3 and 8, wherein the secondary outlet port channel (24) is located in the proximity of the first end (1'), and the second outlet channel (27) is located in the proximity of the second end (1").

10. A plate heat exchanger according to anyone of claims 8 and 9, wherein the outlet plate intespace (28) communicates with the secondary plate intespaces (4, 4') merely via the secondary outlet port channel (24).

11. A plate heat exchanger according to anyone of the preceding claims, wherein the outlet plate interspace (28) has a thickness which is significantly thicker than the thickness of the secondary plate interspaces (4, 4').

12. A plate heat exchanger according to claim 11, wherein the secondary outlet port channel (24) does not extend through the front side (5).

13. A plate heat exchanger according to anyone of claims 11 and 12, wherein the primary inlet port channel (13), the primary outlet port channel (14) and the secondary inlet port channel (23) extend through the front side (5).

14. A plate heat exchanger according to anyone of the preceding claims, wherein the throttle member (35) comprises an influencing member (36) which is connected to the first part space (31') and the second part space (31") and arranged to influence the throttle member (35) by sensing a pressure change of the sensor medium in the space (31).

15. A plate heat exchanger according to anyone of the preceding claims, wherein the throttle member (35) is arranged to control the flow of the primary medium through the primary plate interspaces (3) in response to the sensor medium.

## Patentansprüche

1. Plattenwärmetauscher umfassend
ein Plattenpaket (1) mit einer Mehrzahl von Wärmetauscherplatten (2), die nebeneinander im Plattenpaket (1) derart bereitgestellt sind, dass sie primäre Plattenzwischenräume (3) für ein primäres Medium und sekundäre Plattenzwischenräume (4) für ein sekundäres Medium bilden, wobei diese primären und sekundären Plattenzwischenräume (3, 4) in einer abwechselnden Reihenfolge im Plattenpaket (1) bereitgestellt sind, wobei das Plattenpaket (1) ein erstes Ende (1') und ein zweites gegenüberliegendes Ende (1") und eine Vorderseite (5) und eine gegenüberliegende Rückseite (6) aufweist, wobei ein erster der sekundären Plattenzwischenräume (4) einen äußersten sekundären Plattenzwischenraum (4') bildet,
einen primären Einlass (11), der angeordnet ist, um das primäre Medium in das Plattenpaket (1) zu den primären Plattenzwischenräumen (3) zu transportieren, und einen primären Einlassöffnungskanal (13) umfasst,
einen primären Auslass (12), der angeordnet ist, um das primäre Medium aus dem Plattenpaket (1) von den primären Plattenzwischenräumen (3) zu transportieren, und einen primären Auslassöffnungskanal (14) umfasst,
einen sekundären Einlass (21), der angeordnet ist, um das sekundäre Medium in das Plattenpaket (1) zu den sekundären Plattenzwischenräumen (4, 4") zu transportieren, und mindestens einen sekundären Einlassöffnungskanal (23) umfasst,
einen sekundären Auslass (22), der angeordnet ist, um den sekundären Medienauslass aus dem Plattenpaket (1) von den sekundären Plattenzwischenräumen (4, 4') zu transportieren,
eine Sensorvorrichtung (30), die einen Raum (31) umfasst, der in Bezug auf die primären Plattenzwischenräume (3) und die sekundären Plattenzwischenräume (4, 4') geschlossen ist, wobei der Raum (31) ein Sensormedium enthält, das bereitgestellt ist, um von der Temperatur des sekundären Mediums beeinflusst zu werden, und
ein Drosselorgan (35), das mit der Sensorvorrichtung (30) verbunden und angeordnet ist, um die Strömung eines des primären Mediums und des sekundären Mediums als Reaktion auf das Sensormedium zu steuern,
**dadurch gekennzeichnet, dass** der Raum (31) einen ersten Teilraum (31') umfasst, der durch eine der Wärmetauscherplatten (2) begrenzt ist, die neben und in Wärmeübertragungskontakt mit dem äußersten sekundären Plattenzwischenraum (4') ist, und einen zweiten Teilraum (31"), der neben und in Wärmeübertragungskontakt mit dem sekundären Auslass (22) ist, der den sekundären Plattenzwischenräumen (4, 4') nachgeschaltet befindlich ist.

2. Plattenwärmetauscher nach Anspruch 1, wobei der erste Teilraum (31') neben im Wesentlichen der Gesamtheit der Wärmetauscherplatte (2) ist, die den äußersten sekundären Plattenzwischenraum (4') begrenzt.

3. Plattenwärmetauscher nach einem der Ansprüche 1 und 2, wobei der sekundäre Auslass (22) einen sekundären Auslassöffnungskanal (24) umfasst, der durch das Plattenpaket (1) verläuft.

4. Plattenwärmetauscher nach Anspruch 3, wobei der sekundäre Auslass (22) einen ersten Auslasskanal (26) umfasst, der nach außen in Linie mit dem sekundären Auslassöffnungskanal (24) durch die Vorderseite (5) verläuft.

5. Plattenwärmetauscher nach einem der Ansprüche 3 und 4, wobei der zweite Teilraum (31") im sekundären Auslassöffnungskanal (4) bereitgestellt ist.

6. Plattenwärmetauscher nach Anspruch 5, wobei der zweite Teilraum (31") vom sekundären Medium im sekundären Auslassöffnungskanal (24) umgeben ist.

7. Plattenwärmetauscher nach einem der Ansprüche 1 und 2, wobei der zweite Teilraum (31") durch eine der Wärmetauscherplatten (2) begrenzt ist, die neben einem Auslassplattenzwischenraum (28) ist, der Bestandteil des sekundären Auslasses (22) ist.

8. Plattenwärmetauscher nach Anspruch 7, wobei der sekundäre Auslass (22) einen zweiten Auslasskanal (27) umfasst, der vom Auslassplattenzwischenraum (28) nach außen von der Rückseite (6) verläuft.

9. Plattenwärmetauscher nach Anspruch 3 und 8, wobei sich der sekundäre Auslassöffnungskanal (24) in der Nähe des ersten Endes (1') befindet und sich der zweite Auslasskanal (27) in der Nähe des zweiten Endes (1") befindet.

10. Plattenwärmetauscher nach einem der Ansprüche 8 und 9, wobei der Auslassplattenzwischenraum (28) mit den sekundären Plattenzwischenräumen (4, 4') lediglich über den sekundären Auslassöffnungskanal (24) in Verbindung steht.

11. Plattenwärmetauscher nach einem der vorhergehenden Ansprüche, wobei der Auslassplattenzwischenraum (28) eine Dicke aufweist, die bedeutend dicker als die Dicke der sekundären Plattenzwischenräume (4, 4') ist.

12. Plattenwärmetauscher nach Anspruch 11, wobei der sekundäre Auslassöffnungskanal (24) nicht durch die Vorderseite (5) verläuft.

13. Plattenwärmetauscher nach einem der Ansprüche 11 und 12, wobei der primäre Einlassöffnungskanal (13), der primäre Auslassöffiiungskanal (14) und der sekundäre Einlassöffiiungskanal (23) durch die Vorderseite (5) verlaufen.

14. Plattenwärmetauscher nach einem der vorhergehenden Ansprüche, wobei das Drosselorgan (35) ein Beeinflussungsorgan (36) umfasst, das mit dem ersten Teilraum (31') und dem zweiten Teilraum (31") verbunden und angeordnet ist zum Beeinflussen des Drosselorgans (35) durch Erfassung einer Druckveränderung des Sensormediums im Raum (31).

15. Plattenwärmetauscher nach einem der vorhergehenden Ansprüche, wobei das Drosselorgan (35) angeordnet ist zum Steuern der Strömung des primären Mediums durch die primären Plattenzwischenräume (3) als Reaktion auf das Sensormedium.

## Revendications

1. Échangeur de chaleur à plaques, comprenant
un groupement de plaques (1) avec une pluralité de plaques d'échangeur de chaleur (2) qui sont fournies les unes en dessous des autres dans le groupement de plaques (1) de telle manière qu'elles forment des espaces intermédiaires de plaque primaire (3) pour un milieu primaire et des espaces intermédiaires de plaque secondaire (4) pour un milieu secondaire, lesdits espaces intermédiaires de plaques primaire et secondaire (3, 4) étant fournis dans un ordre alterné dans le groupement de plaques (1), dans lequel le groupement de plaques (1) présente une première extrémité (1') et une deuxième extrémité (1") opposée, et un côté avant (5) et un côté arrière (6) opposé, dans lequel un premier parmi les espaces intermédiaires de plaque secondaire (4) forme un espace intermédiaire de plaque secondaire le plus extérieur (4'),
une entrée primaire (11), qui est agencée de manière à transporter le milieu primaire dans le groupement de plaques (1) jusqu'aux espaces intermédiaires de plaque primaire (3) et qui comprend un canal d'orifice d'entrée primaire (13),
une sortie primaire (12), qui est agencée de manière à transporter le milieu primaire hors du groupement de plaques (1) à partir des espaces intermédiaires de plaque primaire (3) et qui comprend un canal d'orifice de sortie primaire (14),
une entrée secondaire (21), qui est agencée de manière à transporter le milieu secondaire dans le groupement de plaques (1) jusqu'aux espaces intermédiaires de plaque secondaire (4, 4") et qui comprend au moins un canal d'orifice d'entrée secondaire (23),
une sortie secondaire (22), qui est agencée de manière à transporter la sortie du milieu secondaire hors du groupement de plaques (1) à partir des espaces intermédiaires de plaque secondaire (4, 4'),
un dispositif formant capteur (30), qui comprend un espace (31) qui est fermé par rapport aux espaces intermédiaires de plaque primaire (3) et aux espaces intermédiaires de plaque secondaire (4, 4'), dans lequel ledit espace (31) contient un milieu formant capteur qui est fourni de manière à être influencé par la température du milieu secondaire, et
un organe d'admission (35), qui est raccordé au dispositif formant capteur (30) et est agencé pour commander la circulation d'un parmi le milieu primaire et le milieu secondaire en réaction au milieu formant capteur,
**caractérisé en ce que** l'espace (31) comprend une première partie d'espace (31'), qui est délimitée par une desdites plaques d'échangeur de chaleur (2) qui est attenante et qui est en contact de transfert de chaleur avec l'espace intermédiaire de plaque secondaire le plus extérieur (4'), et une deuxième partie d'espace (31"), qui est attenante et se trouve en contact de transfert de chaleur avec la sortie secondaire (22) qui est située en aval des espaces intermédiaires de plaque secondaire (4, 4').

2. Échangeur de chaleur à plaques selon la revendication 1, dans lequel la première partie d'espace (31') est essentiellement attenante à la totalité de ladite plaque d'échangeur de chaleur (2) délimitant l'espace intermédiaire de plaque secondaire le plus extérieur (4').

3. Échangeur de chaleur à plaques selon la revendication 1 ou 2, dans lequel la sortie secondaire (22) comprend un canal d'orifice de sortie secondaire (24) s'étendant à travers le groupement de plaques (1).

4. Échangeur de chaleur à plaques selon la revendication 3, dans lequel la sortie secondaire (22) comprend un premier canal de sortie (26) s'étendant vers l'extérieur aligné sur le canal d'orifice de sortie secondaire (24) à travers le côté avant (5).

5. Échangeur de chaleur à plaques selon la revendication 3 ou 4, dans lequel la deuxième partie d'espace (31") est fournie dans le canal d'orifice de sortie secondaire (4).

6. Échangeur de chaleur à plaques selon la revendication 5, dans lequel la deuxième partie d'espace (31") est entourée par le milieu secondaire dans le canal d'orifice de sortie secondaire (24).

7. Échangeur de chaleur à plaques selon la revendication 1 ou 2, dans lequel la deuxième partie d'espace (31") est délimitée par une desdites plaques d'échangeur de chaleur (2) qui est attenante à un espace intermédiaire de plaque de sortie (28) formant une partie de la sortie secondaire (22).

8. Échangeur de chaleur à plaques selon la revendication 7, dans lequel la sortie secondaire (22) comprend un deuxième canal de sortie (27) s'étendant à partir de l'espace intermédiaire de plaque de sortie (28) vers l'extérieur par rapport au côté arrière (6).

9. Échangeur de chaleur à plaques selon les revendications 3 et 8, dans lequel le canal d'orifice de sortie secondaire (24) est situé à proximité de la première extrémité (1'), et le deuxième canal de sortie (27) est situé à proximité de la deuxième extrémité (1").

10. Échangeur de chaleur à plaques selon la revendication 8 ou 9, dans lequel l'espace intermédiaire de plaque de sortie (28) communique avec les espaces intermédiaires de plaque secondaire (4, 4') simplement via le canal d'orifice de sortie secondaire (24).

11. Échangeur de chaleur à plaques selon l'une quelconque des revendications précédentes, dans lequel l'espace intermédiaire de plaque de sortie (28) présente une épaisseur qui est significativement plus épaisse que l'épaisseur des espaces intermédiaires de plaque secondaire (4, 4').

12. Échangeur de chaleur à plaques selon la revendication 11, dans lequel le canal d'orifice de sortie secondaire (24) ne s'étend pas à travers le côté avant (5).

13. Échangeur de chaleur à plaques selon la revendication 11 ou 12, dans lequel le canal d'orifice d'entrée primaire (13), le canal d'orifice de sortie primaire (14) et le canal d'orifice d'entrée secondaire (23) s'étendent à travers le côté avant (5).

14. Échangeur de chaleur à plaques selon l'une quelconque des revendications précédentes, dans lequel l'organe d'admission (35) comprend un élément d'influence (36) qui est raccordé à la première partie d'espace (31') et à la deuxième partie d'espace (31") et qui est agencé pour influencer l'organe d'admission (35) grâce à une étape consistant à détecter une modification de pression du milieu formant capteur dans l'espace (31).

15. Échangeur de chaleur à plaques selon l'une quelconque des revendications précédentes, dans lequel l'organe d'admission (35) est agencé pour commander la circulation du milieu primaire à travers les espaces intermédiaires de plaque primaire (3) en réaction au milieu formant capteur.
